# EUROPEAN PATENT SPECIFICATION

(11) **EP 2 860 562 B1**
(45) Date of publication and mention of the grant of the patent: **31.01.2018**
(21) Application number: 13804743.6
(22) Date of filing: 04.04.2013
(51) Int. Cl.: G02B 6/44

(54) **OPTICAL FIBRE CABLE**
GLASFASERKABEL
CÂBLE À FIBRE OPTIQUE

(30) Priority: 12.06.2012 JP 2012132596
(43) Date of publication of application: 15.04.2015
(73) Proprietor: FUJIKURA LTD., Koto-ku Tokyo 135-8512 (JP)
(72) Inventor: SHIOBARA, Satoru, Sakura-shi Chiba 285-8550 (JP); OKADA, Naoki, Sakura-shi Chiba 285-8550 (JP); FUKUTE, Takao, Sakura-shi Chiba 285-8550 (JP)
(74) Representative: Grünecker Patent- und Rechtsanwälte PartG mbB
(86) International application number: PCT/JP2013/060292
(87) International publication number: WO 2013/187109

(56) References cited:
- WO-A1-2005/047950
- JP-A- H10 148 737
- JP-A- 2006 343 527
- JP-A- 2010 152 340
- US-A1- 2003 012 529
- US-A1- 2012 020 632

## Description

### TECHNICAL FIELD

The present invention relates to an optical fiber cable laid in an existing pipe conduit.

### BACKGROUND ART

In an existing house and the like, with problems such as reservation of a laying space, increase in a laying cost and the like, it is often difficult to newly provide a pipe conduit. For this reason, in case of newly laying an optical fiber cable, the optical fiber cable may be additionally laid in a gap in an electric conduit, such as a synthetic resin flexible pipe or the like, in which a metal communication wire, such as a telephone wire and the like, has been installed. In this case, since the conventional optical fiber cable, such as a drop cable, an indoor cable, and the like, does not have any structure that is suitable for an installation work into the pipe conduit, the installation work may be carried out by using an installation rod.

The optical fiber cable of a thin diameter having a jacket of low friction coefficient has been proposed, so as to enable the optical fiber cable to easily insert into the pipe conduit for the existing telephone wire and the like without use of the installation rod (refer to patent documents 1 to 3). The patent document 1 describes that a resin to which silicon-based lubricant is added, is used as a jacket. The patent document 2 describes that each friction coefficient of the optical fiber cables is set to 0.17 or more and 0.34 or less. The patent document 3 describes that the jacket has a friction coefficient of 0.2 or less and a Shore D hardness of 60 or more. In all of the proposed optical fiber cables, in order to facilitate the pushing installation into the pipe conduit, a steel wire having a rich extensibility and a high in flexural rigidity has been used as a tension member.
[PATENT DOCUMENT 1] JP 2011-33744A
[PATENT DOCUMENT 2] JP 2010-39378A
[PATENT DOCUMENT 3] JP 2010-175706A

Prior art document US2012020632 relates to an optical fibre cable including an elongated optical element portion having an optical fibre, a pair of tensile strength members, and an outer jacket. The optical fibres are composed of one or more plastic coated optical fibres, tight buffered optical fibres or optical ribbon fibres. The tensile strength member is composed of steel wire having a diameter of 0.5 mm. However, there is a case that the optical fiber cable having a structure in which the metal, such as the steel wire, is included, may receive an induction from an electric power wire and the like. In the foregoing case, it is necessary for the tension member to connect to ground. For this reason, a nonmetallic optical fiber cable having a structure including no metal is required. In a case of the nonmetallic type, an aramid fiber reinforced plastic (AFRP), a glass fiber reinforced plastic (GFRP) or the like may be used as the tension member. However, since the flexural rigidity is lower as compared with the steel wire, it is necessary to increase the diameter of the tension member. When the diameter of the tension member increases, there is a problem that the outer diameter of the optical fiber cable increases. Also, there is a problem that the allowable bending radius of the optical fiber cable increases and the flexibility decreases.

### DISCLOSURE OF INVENTION

In view of the above problems, an object of the present invention is to provide an optical fiber cable which has flexibility and facilitates pushing installation into the electric conduit.

An aspect of the present invention provides an optical fiber cable including an optical fiber core wire; a pair of tension members extending parallel to each other in an extension direction of the optical fiber core wire, sandwiching the optical fiber core wire; and a rectangular jacket covering the optical fiber core wire and the pair of tension members, and in a cross-section orthogonal to the extension direction, having a major axis in a facing direction of the tension members and a minor axis in a direction orthogonal to the facing direction, wherein each of the tension members is glass fiber reinforced plastic having a diameter in a range of 0.7 mm or more and 1 mm or less, and the jacket has a friction coefficient of 0.3 or less, the major axis of 4 mm or less, and the minor axis of 2.8 mm or less.

According to the present invention, it is possible to provide the optical fiber cable which has flexibility and facilitates pushing installation into the pipe conduit.

### BRIEF DESCRIPTION OF DRAWINGS

Fig. 1 is a cross-sectional view showing an example of an optical fiber cable according to an embodiment of the present invention;
Fig. 2 is a view showing an example of a measurement result of a flexural rigidity of a tension member of the optical fiber cable according to the embodiment of the present invention;
Fig. 3 is a schematic view explaining an example of a friction coefficient measurement of the optical fiber cable according to the embodiment of the present invention; and
Fig. 4 is a schematic view of a pipe conduit used to evaluate an installation property of the optical fiber cable according to the embodiment of the present invention.

### DESCRIPTION OF EMBODIMENTS

Various embodiments of the present invention will be described with reference to the accompanying drawings. In the following description of the drawings, same or similar parts are given same or similar reference numerals. However, it is noted that the drawings are schematic and that the relationship between thickness and planar dimensions, the proportion of thicknesses of layers, and the like are different from real ones. Accordingly, specific thicknesses and dimensions should be determined with reference to the following description. It is certain that some portions have different dimensional relations and proportions between the drawings.

Also, the following embodiments show devices and methods to embody the technical idea of the invention by way of example. The technical ideas of the invention do not limit the materials, shapes, structures, arrangements, and the like of the constituent components to those described below. The technical idea of the invention can be variously changed within the scope of the claims.

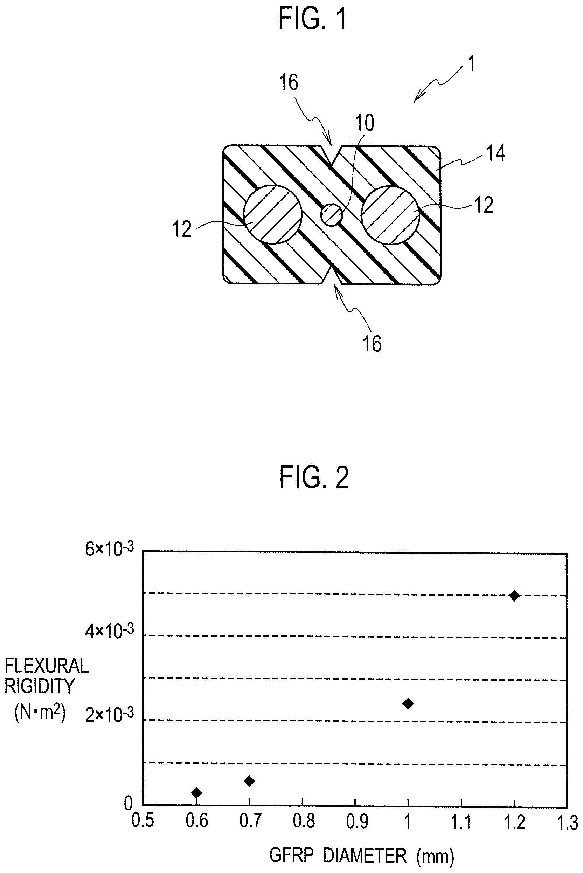

An optical fiber cable 1 according to the embodiment of the present invention includes an optical fiber core wire 10, a pair of tension members 12 and a jacket 14, as shown in Fig. 1. The tension members 12 extend parallel to each other in an extension direction of the optical fiber core wire 10, and sandwich the optical fiber core wire 10 therebetween. The jacket 14 covers together the optical fiber core wire 10 and the pair of tension members 12. In a cross-section orthogonal to the extension direction of the optical fiber core wire 10, the jacket 14 has a rectangular shape and has the major axis in a facing direction of the pair of tension members 12 and the minor axis in a direction orthogonal to the facing direction. In an outer surface of the jacket 14 parallel to the major axis, a pair of notches 16 that face each other with sandwiching the optical fiber core wire 10 are provided.

For example, in case of newly laying the optical fiber cable in a existing house and the like, the optical fiber cable is pushed and installed into an existing electric conduit. When the optical fiber cable is flexible, even pushing the optical fiber cable from an installation port of the electric conduit, the optical fiber cable would undulate in the middle of the electric conduit. As a result, even if the optical fiber cable is pushed, the tip does not go. Thus, it is required that the optical fiber cable is made thinner and the flexural rigidity is made higher.

Conventionally, the steel wire, which has high flexural rigidity and extensibility, is used as the tension member. However, since the inductance is easily received from the electric power wire and the like, the nonmetallic type optical fiber cable is required. For the tension member of the nonmetallic type optical fiber cable, an AFRP wire is preferably used. Since the AFRP wire has lower flexural rigidity as compared with the steel wire, the optical fiber cable would be flexible and the pushing installation would be difficult. When the diameter of the tension member is increased in order to increase the flexural rigidity, the outer diameter of the optical fiber cable would increase and the allowable bending radius would increase. In the optical fiber cable 1 according to the embodiment, the GFRP which has larger rigidity than the AFRP is used for the tension member 12.

Table 1 shows evaluation results of a trial product of the optical fiber cable 1 by using a GFRP wire as the tension member 12. The optical fiber core wire 10 of the trial product of the optical fiber cable 1 is a single-core type core wire having a diameter of 0.25 mm in which a quartz glass fiber having a diameter of 0.125 mm is coated with ultraviolet curing resin. For the tension members 12 of Samples 1 to 10, the GFRP wire having a diameter in a range of 0.6mm or more to 1.2mm or less has been used. Samples 11 and 12 are comparison examples in which the AFRP wire and the steel wire are used for the tension members 12, respectively. For the jacket 14, a resin, in which the friction coefficient has been adjusted by combining a flame retardant, such as magnesium hydroxide and the like, and a friction reducing agent, such as silicon resin and the like, to a base resin which is a blending of linear low density polyethylene (LLDPE), ethylene-vinyl acetate copolymer (EVA) and ethylene-propylene (EP) rubber, is used. Alternatively, the combination of the jacket 14 is one example, and the other resin materials may be used for the base resin, the flame retardant and the friction reducing agent, respectively.

**[Table 1]**

| Sample | Jacket | | | Tension Member | | | Installation | | Bending Radius | |
|---|---|---|---|---|---|---|---|---|---|---|
| | Major (mm) Axis | Minor Axis (mm) | Coefficient | Material | Diameter (mm) | Flexural Rigidity (Nm²) | Stopping Bend | Evaluation | Buckling Radius | Evaluation |
| 1 | 2.4 | 1.6 | 0.25 | GFRP | 0.6 | 0.3x10⁻³ | C5 | × | 7 | ⊚ |
| 2 | 2.4 | 1.6 | 0.3 | GFRP | 0.7 | 0.6x10⁻³ | C14 | ⊚ | 10 | ⊚ |
| 3 | 2.4 | 1.6 | 0.35 | GFRP | 0.7 | 0.6x10⁻³ | C4 | × | 10 | ⊚ |
| 4 | 4 | 2.8 | 0.3 | GFRP | 0.7 | 06x10⁻³ | C9 | ○ | 10 | ⊚ |
| 5 | 4.5 | 3.2 | 0.3 | GFRP | 0.7 | 0.6x10⁻³ | C6 | × | 10 | ⊚ |
| 6 | 3.4 | 2 | 0.3 | GFRP | 1 | 2.4x10⁻³ | C13 | ⊚ | 18 | ○ |
| 7 | 3.4 | 2 | 0.35 | GFRP | 1 | 2.4x10⁻³ | C5 | × | 18 | ○ |
| 8 | 4 | 2.8 | 0.3 | GFRP | 1 | 2.4x10⁻³ | C13 | ⊚ | 18 | ○ |
| 9 | 4.5 | 3.2 | 0.3 | GFRP | 1 | 24x10⁻³ | C6 | × | 18 | ○ |
| 10 | 4 | 2.8 | 0.3 | GFRP | 1.2 | 5x10⁻³ | C7 | ○ | 26 | × |
| 11 | 2 | 1.6 | 0.21 | AFRP | 0.5 | 0.2x10⁻³ | C3 | × | 6 | ⊚ |
| 12 | 2 | 1.6 | 0.2 | Steel Wire | 0.5 | 0.6x10⁻³ | C13 | ⊚ | - | - |

Each flexural rigidity of the GFRP wire, the AFRP wire and the steel wire, used for the tension members 12, has been measured by the method pursuant to International Electrotechnical Commission (IEC) 60794-1-2 Method E17C. Specifically, a spacing between pressing plates sandwiching the tension members 12 has been set to about 60 mm, so as to measure a force generated in the tension member 12. Fig. 2 shows a relation between the diameter of the GFRP wire and the flexural rigidity. As shown in Fig. 2, for the diameters of the GFRP wire in a range of 0.6 mm to 1.2 mm, the flexural rigidities has been in a range of 0.3×10⁻³ Nm² to 5×10⁻³ Nm².

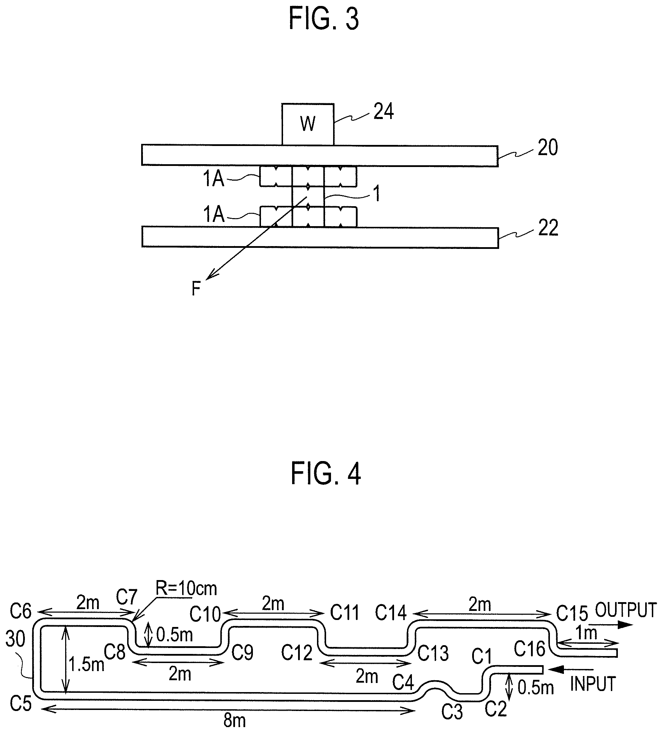

The friction coefficient has been measured by a measurement apparatus shown in Fig. 3. Two or more, for example, three of optical fiber cables 1A cut out from the optical fiber cable 1 of a measurement target, have been pasted onto a upper plate 20 and a lower plate 22, respectively. A weight 24 has been applied to the upper plate 20, and a load W which is the sum of the upper plate 20 and the weight 24 has been set to 2 kg. The friction coefficient µ (µ = F/W) has been determined by a pull-out force F measured by horizontally pulling the optical fiber cable 1 sandwiched between the optical fiber cables 1A pasted on the upper plate 20 and the lower plate 22.

The installation work has been evaluated by using a test pipe conduit 30 shown in Fig. 4. The test pipe conduit 30 is a synthetic resin flexible pipe (a corrugate pipe) having an inner diameter of about 15 mm and a length of about 26 m, and right angle bends C1, C2 and C5 to C15 each having a curvature radius R of 10 cm and S-shaped bends C3 and C4 each having an angle of about 45 degrees are formed. Within the test pipe conduit 30, a metal communication wire having an outer diameter of about 5 mm is installed. The pushing installation of the trial product of the optical fiber cable 1 into the test pipe conduit 30 has been carried out and evaluated with a stopping bend. It has been determined: to be excellent (⊚), when the stopping bend has been C11 or beyond C11 toward the outlet, to be good (○), when the stopping bend has been between C7 and C10, and to be no-good (×), when the stopping bend has been C6 or short of C6.

The bending radius has been evaluated by measuring a bending radius (a buckling radius) when buckling has occurred in the tension member 12. It has been determined: to be excellent (⊚), when the buckling radius has been 15 mm or less, to be good (○), when the buckling radius has been greater than 15 mm and 20 mm or less, and to be no-good (×), when the buckling radius has been greater than 20 mm.

As shown in Table 1, in the case when the GFRP wire has been used as the tension member 12, it has been confirmed that the excellent installation property may be achieved for the jacket 14 having the major axis of 4 mm or less, the minor axis of 2.8 mm or less and the friction coefficient of 0.3, and for the GFRP wire having the diameter of 0.7 mm or more. When the friction coefficient of the jacket 14 has exceeded 0.3, as shown in the results of Samples 3 and 7, even if the diameter of the jacket 14 has been thin or the diameter of the tension member 12 has been large such as 1 mm, the installation property has been no-good. Also, as can be understood from the result of Sample 1, even if the jacket 14 is thin and the friction coefficient is small, in the case when the diameters of the tension members 12 are so thin as 0.6 mm, the flexural rigidity becomes small and the installation property becomes no-good.

Also, for Sample 11, using the AFRP wire having a diameter of 0.5 mm, as the comparison example, the flexural rigidity is small and the installation property is no-good. On the other hand, for Sample 12, the installation property is excellent because of using the steel wire.

As mentioned above, the optical fiber cable 1 according to the embodiment may achieve the excellent installation property, because of the high flexural rigidity of the tension member 12 using the GFRP wire and the low friction property of the jacket 14. The outer diameter of the optical fiber cable 1 may be desired to be as small as possible, with a dimension that enables the optical fiber core wire 10 and the tension members 12 to assemble therein. For example, when the major axis of the jacket 14 is 4 mm or less and the minor axis is 2.8 mm or less, the excellent installation property may be achieved. Also, in a case when the optical fiber core wire 10 having a diameter of 0.25 mm and each of the tension members 12 having a diameter of 0.7 mm are assembled, the major axis is required to be 2.4 mm, and the minor axis is required to be 1.6 mm. In addition, although the single-core type core wire is used for the optical fiber core wire 10, a plurality of core wires may also be used.

The flexural rigidity may be increased with increasing the diameters of the tension members 12, and the extensibility may be increased when pushing the optical fiber cable 1 into the electric conduit, and thus, the pushing installation of the optical fiber cable 1 may be easy. However, since the buckling of the tension member 12 may easily occur by bending, the bending radius of the optical fiber cable 1 may be increased. Also, in order to assemble the tension members 12 having thick diameters, the outer diameter of the optical fiber cable 1 should be increased. In Sample 10 using the GFRP wire having a diameter of 1.2 mm for each of the tension members 12, the tension members 12 have buckled at the bending radius of about 26 mm. For this reason, a working property for installing the optical fiber cable 1 into a house, and a storage property into a connection box may become bad. Thus, as the tension member 12, the GFRP wire having a diameter of 1 mm or less is desirable. In addition, in Sample 12 of the comparison example, each of the tension members 12 is the steel wire, and thus, since plastic deformation occurs by bending, buckling may not occur.

In this way, in the optical fiber cable 1 according to the embodiment, the jacket 14 having the major axis of 4 mm or less, the minor axis of 2.8 mm or less, desirably the major axis in a range of 2.4 mm or more to 4 mm or less, the minor axis in a range of 1.6 mm or more to 2. 8 mm or less, and the friction coefficient of 0.3 or less, is used. Moreover, for the tension member 12, the GFRP wire having a diameter in a range of 0.7 mm or more to 1 mm or less, desirably, a diameter of 0.7 mm, is used. As a result, it is possible to achieve the optical fiber cable 1 which has flexibility and facilitates pushing installation into the pipe conduit.

### (OTHER EMBODIMENTS)

The present invention has been described as mentioned above. However the descriptions and drawings that constitute a portion of this disclosure should not be perceived as limiting this invention. Various alternative embodiments and operational techniques will become clear to persons skilled in the art from this disclosure. Accordingly, the technical scope of the present invention is determined only by the features of the invention according to proper claims.

### INDUSTRIAL APPLICABILITY

The present invention can be applied to the optical fiber cable which is laid in the existing pipe conduit.

## Claims

1. An optical fiber cable (1) comprising:
an optical fiber core wire (10);
a pair of tension members (12) extending parallel to each other in an extension direction of the optical fiber core wire (10), sandwiching the optical fiber core wire (10); and
a rectangular jacket (14) covering the optical fiber core wire (10) and the pair of tension members (12), and in a cross-section orthogonal to the extension direction, having a major axis in a facing direction of the tension members and a minor axis in a direction orthogonal to the facing direction,
wherein the jacket (14) has a friction coefficient of 0.3 or less, the major axis of 4 mm or less, and the minor axis of 2.8 mm or less,
**characterized in that**
each of the tension members (12) is glass fiber reinforced plastic having a diameter in a range of 0.7 mm or more and 1 mm or less.

2. The optical fiber cable of claim 1, wherein each of the tension members has a diameter of 0.7 mm.

3. The optical fiber cable of claim 1 or 2, wherein the jacket has the major axis in a range of 2.4 mm or more and 4 mm or less, and the minor axis in a range of 1.6 mm or more and 2.8 mm or less.

## Patentansprüche

1. Glasfaserkabel (1), umfassend:
einen Glasfaserkerndraht (10);
ein Paar von Zugspannungselementen (12), die sich parallel zueinander in einer Erstreckungsrichtung des Glasfaserkerndrahts (10) derart erstrecken, dass sie den optischen Faserkerndraht (10) sandwichartig aufnehmen; und
einen rechteckigen Kabelmantel (14), der den Glasfaserkerndraht (10) und das Paar von Zugspannungselementen (12) bedeckt und in einem Querschnitt orthogonal zur Erstreckungsrichtung eine Hauptachse in einer gegenüberliegenden Richtung der Zugspannungselemente und eine Nebenachse in einer Richtung orthogonal zur gegenüberliegenden Richtung aufweist,
wobei der Kabelmantel (14) einen Reibungskoeffizienten von 0,3 oder weniger, die Hauptachse von 4 mm oder weniger und die Nebenachse von 2,8 mm oder weniger aufweisen,
**dadurch gekennzeichnet, dass**
jedes der Zugspannungselemente (12) ein glasfaserverstärkter Kunststoff mit einem Durchmesser im Bereich von 0,7 mm oder mehr und 1 mm oder weniger ist.

2. Glasfaserkabel nach Anspruch 1, wobei jedes der Zugspannungselemente einen Durchmesser von 0,7 mm aufweist.

3. Glasfaserkabel nach Anspruch 1 oder 2, wobei der Kabelmantel die Hauptachse in einem Bereich von 2,4 mm oder mehr und 4 mm oder weniger und die Nebenachse in einem Bereich von 1,6 mm oder mehr und 2,8 mm oder weniger aufweist.

## Revendications

1. Câble à fibre optique (1) comprenant :
un fil central de fibre optique (10) ;
une paire d'éléments de tension (12) s'étendant parallèlement l'un à l'autre dans une direction d'extension du fil central de fibre optique (10) et prenant en sandwich le fil central de fibre optique (10) ; et
une gaine rectangulaire (14) couvrant le fil central de fibre optique (10) et la paire d'éléments de tension (12), et comportant, dans une coupe transversale perpendiculaire à la direction d'extension, un grand axe dans une direction d'opposition aux éléments de tension et un petit axe dans une direction perpendiculaire à la direction d'opposition,
où la gaine (14) a un coefficient de friction de 0,3 ou moins, le grand axe a une longueur de 4 mm ou moins et le petit axe une longueur de 2,8 mm ou moins,
**caractérisé en ce que**
chacun des éléments de tension (12) est en plastique renforcé par de la fibre de verre ayant un diamètre compris entre 0,7 mm ou plus et 1 mm ou moins.

2. Câble de fibre optique selon la revendication 1, où chacun des éléments de tension a un diamètre de 0,7 mm.

3. Câble de fibre optique selon la revendication 1 ou 2, où la gaine a un grand axe compris entre 2,4 mm ou plus et 4 mm ou moins, et un petit axe compris entre 1,6 mm ou plus et 2,8 mm ou moins.
